# EUROPÄISCHE PATENTSCHRIFT

(11) **EP 1 053 406 B1**
(45) Veröffentlichungstag und Bekanntmachung des Hinweises auf die Patenterteilung: **04.12.2002**
(21) Anmeldenummer: 99910185.0
(22) Anmeldetag: 03.02.1999
(51) Int. Cl.: F16B 47/00

(54) **VERBINDER**
CONNECTOR
RACCORD

(30) Priorität: 03.02.1998 DE 19804153; 24.11.1998 DE 19854059
(43) Veröffentlichungstag der Anmeldung: 22.11.2000
(73) Patentinhaber: fischerwerke Artur Fischer GmbH & Co. KG, 72178 Waldachtal (DE)
(72) Erfinder: DE LA FONTAINE, Christophe, D-70199 Stuttgart (DE); DIEZ, Stefan, D-70192 Stuttgart (DE)
(86) Internationale Anmeldenummer: EP9900691
(87) Internationale Veröffentlichungsnummer: WO99040332

(56) Entgegenhaltungen:
- WO-A-96/27087
- FR-A- 1 144 113
- FR-A- 2 750 179
- GB-A- 2 118 238
- US-A- 2 385 977
- US-A- 2 642 248

## Beschreibung

Die Erfindung betrifft einen Verbinder zum Verbinden von zwei aneinanderliegenden Bauteilen gemäß dem Oberbegriff des Anspruches 1.

Aus der WO 96/27087 ist ein gattungsgemäßer Verbinder mit einem gewölbten Flächenabschnitt bekannt, der mittels einem Haltestück an einem Bauteil befestigbar ist. Der gewölbte Flächenabschnitt bildet einen Saugnapf, der durch Aufpressen auf eine glatte Oberfläche eines zweiten Bauteils einen Unterdruck im Saugnapf erzeugt und damit eine Verbindung der beiden Bauteile ermöglicht. Damit nach der Verbindung die beiden Bauteile aneinander liegen, weist das den Saugnapf-Verbinder tragende Bauteil eine konkave Aufnahme auf, in die der Saugnapf versenkbar ist. Der bekannte Verbinder eignet sich nur für das Ankoppeln eines Bauteiles, das eine glatte und porenfreie Oberfläche aufweist, wobei die Haltekraft der Verbindung von der Größe des Saugnapfs und dessen Dichtfunktion an seinem Befestigungsrand abhängt.

Der Erfindung liegt die Aufgabe zugrunde, einen Verbinder zu schaffen, der eine verdeckte Befestigung von Bauteilen unabhängig von deren Material und Oberflächenbeschaffenheit sowie eine Demontage in einfacher Weise ermöglicht.

Diese Aufgabe wird dadurch gelöst, dass das Stützteil von einer in die Aufnahme eines Bauteils passenden konvexen Form in eine konkave Form umklappbar ist, wobei die Außenabmessung des Befestigungsrands nach dem Umklappen erweitert und der Abstand des Befestigungsrands zum am Haltestück angekoppelten Bauteil verringert ist. Durch die Erweiterung der Außenabmessung des Befestigungsrands verspannt sich das Stützteil an einer Stützfläche der Aufnahme, so dass eine dauerhafte mechanische Verankerung entsteht. Durch die Geometrieveränderung des Flächenabschnittes verringert sich gleichzeitig der Abstand des Befestigungsrands zum am Haltestück gekoppelten Bauteil, so dass beide Bauteile sich aufeinander zu bewegen. Durch entsprechende Abstimmung des Flächenabschnitts kann der Abstand soweit verringert werden, dass die beiden Bauteile nach der Montage unter Spannung aneinander liegen. Zum Lösen der verbundenen Bauteile müssen diese lediglich wieder unter Kraftaufwendung auseinanderbewegt werden, wobei der Flächenabschnitt in seinen Ursprungszustand zurückkehrt.

Infolge der kontinuierlichen Verstellung des Flächenabschnittes kann auch erreicht werden, dass sich die zu verbindenden Bauteile über eine gewisse Wegstrecke mit Kraft zusammenziehen. Damit können Fertigungstoleranzen der Bauteile und des Verbinders ausgeglichen werden.

Eine Verbindung der Bauteile mit dem erfindungsgemäßen Verbinder ist unabhängig von der Oberflächenbeschaffenheit oder Material der Bauteile möglich. Damit eignet sich der Verbinder auch für die Verbindung von Holzbauteilen bzw. für die verdeckte Montage von Verkleidungsplatten unterschiedlicher Materialien an Mauerwerk.

Nach einer bevorzugten Ausgestaltung ist es vorgesehen, dass der Flächenabschnitt eine tellerförmig gewölbte Form mit einem umlaufenden Befestigungsrand aufweist. Durch den umlaufenden Befestigungsrand wird eine gleichmäßige Vorspannung am gesamten Umfang des Flächenabschnitts erreicht.

Zweckmäßigerweise ist die Aufnahme des Bauteils eine konkave Öffnung mit einem Öffnungsrand, dessen Abmessung gleich oder größer als die Außenabmessung des Befestigungsrandes in der konvexen Form des Flächenabschnitts ist. Dies ermöglicht in einfacher Weise das Einschieben des Flächenabschnitts in die Aufnahme des Bauteils und das Umklappen des Flächenabschnitts in die konkave Form, wobei der Flächenabschnitt nach dem Umklappen in der Aufnahme versenkt ist.

Die Aufnahme kann einen oder mehrere Hinterschnitte aufweisen, die im montierten Verbinderzustand von dem Befestigungsrand hintergriffen sind. Über diese Hinterschnitte wird eine formschlüssige Verbindung hergestellt. Das Fügen der beiden Bauteile ist einfach möglich, da der Verbinder zunächst in der Öffnung eingesetzt und anschließend hierin verspreizt wird.

Bevorzugterweise wird der Hinterschnitt für den Befestigungsrand des Flächenabschnittes von dem öffnungsrand gebildet.

Zur Unterstützung der Haltekräfte kann es vorgesehen sein, dass der Flächenabschnitt mit seinem Befestigungsrand umlaufend abgedichtet in der Aufnahme festlegbar ist, dass die Aufnahme eine Stützfläche aufweist, auf der sich der Flächenabschnitt zumindest teilweise abstützt, und dass im Bereich zwischen dem Flächenabschnitt und der Stützfläche im gefügten Zustand der Bauteile eine abgedichtete Kammer entsteht. Beim Fügen der Bauteile wird die in der Kammer befindliche Luft herausgedrückt. Demnach entsteht hier ein Vakuum, welches der Demontage der beiden Bauteile einen weiteren Widerstand entgegensetzt.

Um eine wirkungsvolle Verstellung der Wölbung des Flächenabschnittes erreichen zu können, ist es vorgesehen, dass das Haltestück im Mittenbereich des Flächenabschnittes angekoppelt ist.

Eine denkbare Erfindungsalternative ist dadurch gekennzeichnet, dass das Haltestück zwei Stützteile trägt, wobei das eine Stützteil am ersten und das zweite Stützteil am zweiten Bauteil angekoppelt ist.

Aus Gründen der Montage- und Fertigungsvereinfachung kann es hierbei vorgesehen sein, dass die Stützteile baugleich ausgebildet sind. Die Aufnahme für den Verbinder kann direkt in das jeweilige Bauteil eingearbeitet sein. Es ist jedoch auch denkbar, dass die Aufnahme von einem Einsatz gebildet ist, der in eine Aussparung des Bauteiles einsetzbar und hierin festlegbar ist.

Die Erfindung wird im Folgenden anhand vori in den Zeichnungen dargestellten Ausführungsbeispielen näher erläutert. Es zeigen:
- Fig. 1a: zwei zu fügende Bauteile in einer ersten Montageposition in Seitendarstellung und im Schnitt,
- Fig. 1b: die Darstellung gem. Fig. 1a in einer zweiten Montageposition,
- Fig. 1c: die beiden in den Fig. 1a und 1b dargestellten Bauteile im gefügten Zustand,
- Fig. 2: die Darstellung gem. Fig. 1b in perspektivischer Darstellung,
- Fig. 3a: zwei zu fügende Bauteile in einer ersten Montageposition in Seitendarstellung und im Schnitt,
- Fig. 3b: die Darstellung gem. Fig. 3a in einer zweiten Montageposition,
- Fig. 3c: die Darstellung gem. Fig. 3b in einer zweiten Montageposition und
- Fig. 3d: die in den Fig. 3a bis 3c gezeigten Bauteile im gefügten Zustand.

In der Fig. 1a sind zwei zu fügende Bauteile 10, 30 dargestellt. Die Bauteile 10, 30 sind als plattenförmige Körper ausgebildet und weisen einander zugekehrte Anlageflächen 11, 35 auf. An dem unteren Bauteil 10 ist ein Verbinder 20 festgemacht. Der Verbinder 20 weist ein Haltestück 23 auf, das über die Anlagefläche 11 vorsteht. An einem der Anlagefläche 11 abgekehrten Ende trägt das Haltestück 23 ein Stützteil 21. Das Stützteil 21 weist einen Flächenabschnitt auf, der von einem kreisförmig umlaufenden Befestigungsrand 22 abgeschlossen ist. Wie die Fig. 1a erkennen läßt, ist der Flächenabschnitt konkav gewölbt. Der Befestigungsrand 22 steht auf der Anlagefläche 11 auf, so daß sich ein optisch ansprechender Abschluß des Verbinders 20 ergibt. Der Durchmesser des Verbinders 20, der durch den Befestigungsrand 22 bestimmt wird, ist in der Fig. 1a mit a bezeichnet.

Das obere Bauteil 30 ist mit einer taschenförmigen Aussparung versehen. In diese Aussparung kann ein Einsatz 32 eingebracht werden. Der Einsatz 32 bildet eine Aufnahme 31 für den Verbinder 20. Sie weist eine gewölbte Stützfläche 33 auf, die durch eine Öffnung 34 hindurch zugänglich ist. Die Öffnung 34 wird von einem umlaufenden und mit Hinterschnitt versehenen Öffnungsrand 34.1 begrenzt.

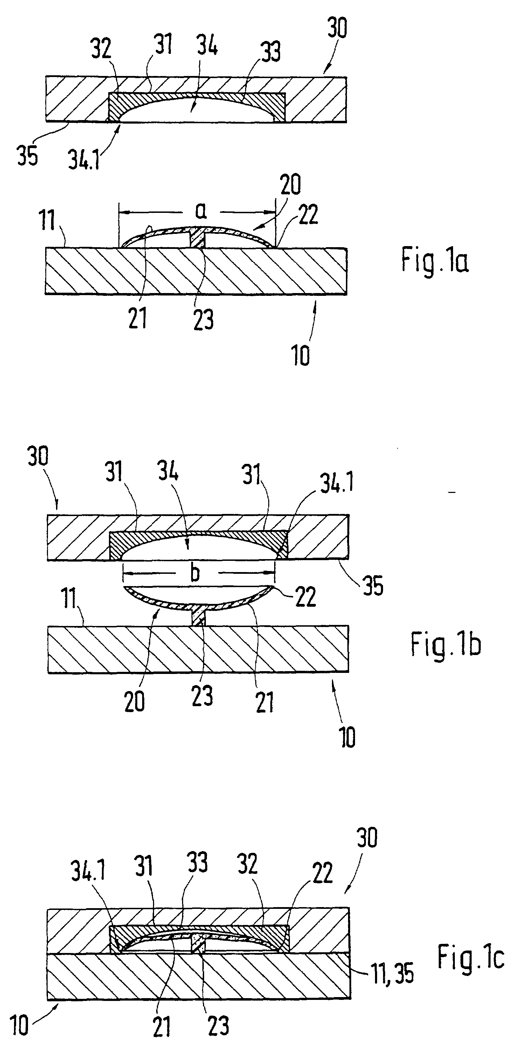

Wenn die beiden Bauteile 10, 30 gefügt werden sollen, so muß zunächst der Flächenabschnitt des Stützteiles 21 umgeklappt und in seine konvexe Form gebracht werden, wie dies die Fig. 1b veranschaulicht. Der durch den Befestigungsrand 22 festgelegte Durchmesser b des Flächenabschnittes ist dann kleiner als die von dem Öffnungsrand 34.1 festgelegte lichte Öffnungsweite. Aufgrund dieser Durchmesserverhältnisse kann der Verbinder 20 leicht in die Aufnahme 31 eingesetzt werden. Auf die beiden Bauteile 10, 30 kann dann eine Druckkraft aufgebracht werden. Diese Druckkraft wird über das Haltestück 23 in den Flächenabschnitt des Verbinders 20 weitergeleitet. Das Haltestück 23 schiebt sich dann stempelartig in die Aufnahme 31 ein und bringt so den Flächenabschnitt von seinem konvexen in einen konkaven Zustand. Die hierdurch entstandene Durchmesservergrößerung läßt den Befestigungsrand 22 den hinterschnittenen Öffnungsrand 34.1 hintergreifen (s. Fig. 1c). Da der Flächenabschnitt aus einem elastischen Material, beispielsweise einem Metallblech oder einem Kunststoff besteht, werden radial wirkende Spreizkräfte entwickelt, die eine sichere Fixierung der beiden Bauteile 10, 30 gewährleisten und die Anlageflächen 11, 35 gegeneinander verspannen.

Wie die Fig. 1c erkennen läßt, liegt der Flächenabschnitt des Verbinders 20 im montierten Zustand teilweise an der Stützfläche 33 an. Der Befestigungrand 22 liegt abgedichtet im Bereich des Öffnungsrandes 34.1 an. Somit entsteht zwischen dem Flächenabschnitt und der Stützfläche 33 eine Kammer, aus der beim Fügen der beiden Bauteile 10, 30 zunächst die hier vorhandene Luft ausgepreßt werden muß, wodurch sich ein kontiniuierlicher Fügevorgang ergibt. Nach dem Fügen entsteht dann eine Art Unterdruckkammer, die die Fügekräfte unterstützt und ein Demontieren der Bauteile 10, 30 erschwert. Wenn dieser Effekt nicht gewünscht wird, so können in den Flächenabschnitt des Verbinders 20 Luftaustrittsöffnungen eingearbeitet werden.

Bei dem vorliegenden Verbinder 20 erweist es sich als vorteilhaft, daß die für die Verbindung benötigten Teile im demontierten Zustand nur unwesentlich über die Anlageflächen 11, 35 vorstehen (s. Fig. 1a). Damit werden sie zum einen optisch nicht als störend empfunden, zum anderen stellen sie dann auch keine Verletzungsgefahr dar. Wie die Fig. 1 a erkennen läßt, bieten die Verbindungselemente im demontierten Zustand großzügige Flächen, die leicht zu reinigen sind, so daß sich der Verbinder 20 insbesondere für den Einsatz im Hygienebereich (Küchen, Krankenhäuser, etc.) eignet.

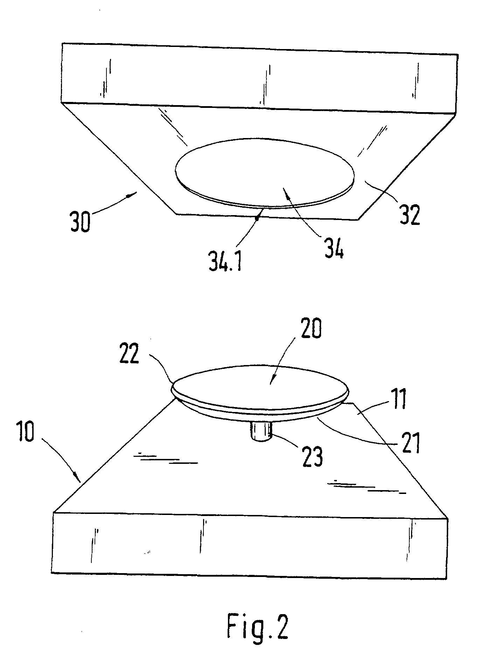

In der Fig. 2 ist die Darstellung gem. Fig. 1b in perspektivischer Ansicht zur besseren Verdeutlichung dargestellt.

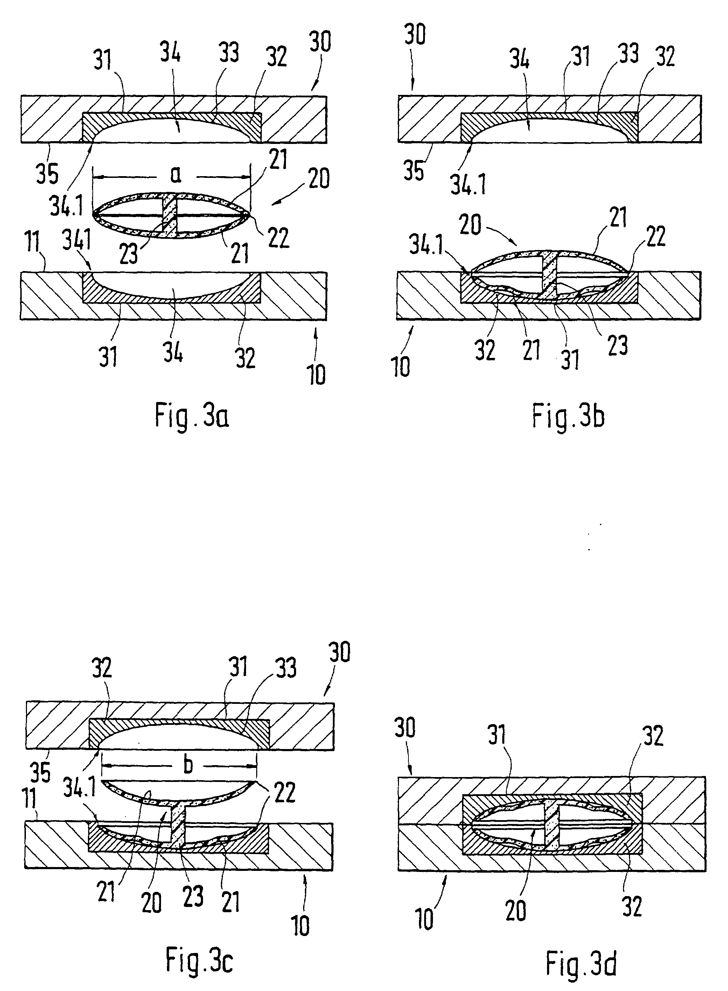

Die Fig. 3a bis 3d zeigen eine weitere Ausgestaltungsvariante eines erfindungsgemäßen Verbinders 20. Wie sich den Zeichnungen entnehmen läßt, trägt das Haltestück 23 des Verbinders 20 zwei Stützteile 21.

Die Fig. 3a zeigt den Grundzustand des Verbinders 20. Hierbei liegen die beiden Stützteile 21 mit ihren Befestigungsrändern 22 aneinander, wobei die Flächenabschnitte der Stützteile 21 konkav ausgebildet sind. Die beiden Bauteile 10, 30 sind jeweils mit einem Einsatz 32 versehen, wie er bereits vorstehend näher erläutert wurde. Zur Montage wird zunächst das untenliegende Stützteil 21 des Verbinders 20 in seine konvexe Form aufgebogen. Der Verbinder 20 läßt sich dann mit seinem Stützteil 21 in den Einsatz 32 des unteren Bauteils 10 einsetzen, wobei sich der Befestigungsrand 22 des Stützteiles 21 an dem Öffnungsrand 34.1 des Einsatzes 32 verspannt. Dieser Montagezustand ist in der Fig. 3b gezeigt. Wie Fig. 3b weiter veranschaulicht, überdeckt das obenliegende Stützteil 21 den Einsatz 32 zum größten Teil und bietet so einen optischen Abschluß.

Zur weiteren Montage des Verbinders 20 wird anschließend das obenliegende Stützteil 21 in seine konvexe Form geklappt. Anschließend werden die beiden Bauteile 10, 30, wie vorstehend unter Bezugnahme auf die Fig. 1 b und 1c erläutert, gefügt. Der End-Montagezustand läßt sich der Fig. 3 d entnehmen.

## Patentansprüche

1. Verbinder zum Verbinden von zwei aneinanderliegenden Bauteilen (10, 30), wobei der Verbinder ein an einem Bauteil (10) ankoppelbares Haltestück (23) aufweist, an dem ein als gewölbter Flächenabschnitt mit einem Befestigungsrand (22) ausgebildetes und in einer Aufnahme (31) eines Bauteils (30) versenkbares Stützteil (21) angeordnet ist, **dadurch gekennzeichnet, dass** das Stützteil (21) von einer in die Aufnahme (31) eines Bauteils (30) passenden konvexen Form bezüglich des Haltestücks (23) in eine konkave Form umklappbar ist, wobei die Außenabmessung des Befestigungsrands (22) nach dem Umklappen erweitert und der Abstand des Befestigungsrands (22) zum am Haltestück (23) angekoppelten Bauteil (10) verringert ist.

2. Verbinder nach Anspruch 1, **dadurch gekennzeichnet, dass** der Flächenabschnitt des Stützteils (21) eine tellerförmig gewölbte Form mit einem umlaufenden Befestigungsrand (22) aufweist.

3. Verbinder nach Anspruch 1, **dadurch gekennzeichnet, dass** die Aufnahme (31) des Bauteils (30) eine konkave Öffnung (24) mit einem Öffnungsrand (34.1) ist, dessen Durchmesser gleich oder größer als die Außenabmessung des Befestigungsrandes (22) in der konvexen Form des Stützteils (21) ist.

4. Verbinder nach Anspruch 3, **dadurch gekennzeichnet, dass** die Aufnahme (31) einen oder mehrere Hinterschnitte aufweist, die im montierten Verbindungszustand von dem Befestigungsrand (22) hintergriffen sind.

5. Verbinder nach Anspruch 4, **dadurch gekennzeichnet, dass** der Hinterschnitt für den Befestigungsrand (22) des Flächenabschnittes von dem Öffnungsrand (34.1) gebildet ist.

6. Verbinder nach Anspruch 2, **dadurch gekennzeichnet, dass** der Flächenabschnitt mit seinem Befestigungsrand (22) umlaufend abgedichtet in der Aufnahme (31) festlegbar ist, dass die Aufnahme eine Stützfläche (33) aufweist, auf der sich der Flächenabschnitt zumindest teilweise abstützt, und dass im gefügten Zustand der Bauteile (10, 30) im Bereich zwischen dem Flächenabschnitt und der Stützfläche (33) eine abgedichtete Kammer entsteht.

7. Verbinder nach Anspruch 1, **dadurch gekennzeichnet, dass** das Haltestück (23) im Mittenbereich des Stützteils (21) angekoppelt ist.

8. Verbinder nach Anspruch 1, **dadurch gekennzeichnet, dass** das Haltestück (23) zwei Stützteile (21) trägt, wobei das eine Stützteil (21) am ersten und das zweite Stützteil am zweiten Bauteil (10 und 30) ankoppelbar ist.

9. Verbinder nach Anspruch 8, **dadurch gekennzeichnet, dass** die Stützteile (21) baugleich ausgebildet sind.

10. Verbinder nach Anspruch 1, **dadurch gekennzeichnet, dass** die Aufnahme (31) in den Bauteilen (10, 30) von einem Einsatz (32) gebildet ist, der in eine Aussparung der Bauteile (10, 30) einsetzbar und hierin festlegbar ist.

## Claims

1. Connector for connecting two contiguous building components (10, 30), the connector comprising a holding piece (23) that is arranged to be coupled to a building component (10), on which holding piece there is arranged a support piece (21) in the form of a convex surface part having a securing rim (22) and that is arranged to be countersunk in a seating (31) of a building component (30), **characterized in that** the support piece (21) can be reversed from a convex configuration, relative to the holding piece (23), in which it fits into the seating (31) of a building component (30), to a concave configuration, the outer dimension of the securing rim (22) being widened after reversal and the spacing of the securing rim (22) from the building component (10) coupled to the holding piece (23) being reduced.

2. Connector according to claim 1, **characterized in that** the surface part of the support piece (21) is curved in the shape of a dish having a peripheral securing rim (22).

3. Connector according to claim 1, **characterized in that** the seating (31) of the building component (30) is a concave opening (24) having a rim (34.1) to the opening, the diameter of which rim is equal to or greater than the outer dimension of the securing rim (22) when the support piece (21) is in the convex configuration.

4. Connector according to claim 3, **characterized in that** the seating (31) has one or more undercuts, behind which the securing rim (22) engages in the assembled connecting state.

5. Connector according to claim 4, **characterized in that** the undercut for the securing rim (22) of the surface part is formed by the rim (34.1) to the opening.

6. Connector according to claim 2, **characterized in that** the surface part and its securing rim (22) can be fixed, sealed peripherally, in the seating (31), the seating comprises a support face (33) on which at least part of the surface part is supported, and, in the joined state of the building components (10, 30), a sealed chamber is formed in the region between the surface part and the support face (33).

7. Connector according to claim 1, **characterized in that** the holding piece (23) is coupled in the central region of the support piece (21).

8. Connector according to claim 1, **characterized in that** the holding piece (23) has two support pieces (21), one support piece (21) being arranged to be coupled to the first building component (10) and the second support piece being arranged to be coupled to the second building component (30).

9. Connector according to claim 8, **characterized in that** the support pieces (21) are of like construction.

10. Connector according to claim 1, **characterized in that** the seating (31) in the building components (10, 30) is formed by an insert (32) that is arranged to be inserted into a recess in the building components (10, 30) and fixed therein.

## Revendications

1. Connecteur pour l'assemblage de deux éléments de construction (10, 30) appliqués l'un contre l'autre, le connecteur présentant une pièce de maintien (23) qui peut être accouplée à un élément de construction (10) et sur laquelle est disposée une partie de soutien (21) réalisée sous forme de segment de surface arqué doté d'un bord de fixation (22) et pouvant être encastrée dans un logement (31) d'un élément de construction (30), **caractérisé en ce que** la partie de soutien (21) peut être rabattue par rapport à la pièce de maintien (23) d'une forme convexe rentrant dans le logement (31) d'un élément de construction (30) à une forme concave, la dimension extérieure du bord de fixation (22) étant agrandie à la suite du rabattement, et la distance entre le bord de fixation (22) et l'élément de construction (10) accouplé à la pièce de maintien (23) étant réduite.

2. Connecteur selon la revendication 1, **caractérisé en ce que** le segment de surface de la partie de soutien (21) présente une forme bombée en disque, avec un bord de fixation entourant (22).

3. Connecteur selon la revendication 1, **caractérisé en ce que** le logement (31) de l'élément de construction (30) est une ouverture concave (34) dotée d'un bord d'ouverture (34.1) dont le diamètre est supérieur ou égal à la dimension extérieure du bord de fixation (22) dans la forme convexe de la partie de soutien (21).

4. Connecteur selon la revendication 3, **caractérisé en ce que** le logement (31) présente une ou plusieurs contre-dépouilles qui sont entourées par l'arrière, à l'état monté d'assemblage, par le bord de fixation (22).

5. Connecteur selon la revendication 4, **caractérisé en ce que** la contre-dépouille pour le bord de fixation (22) du segment de surface est formée par le bord d'ouverture (34.1).

6. Connecteur selon la revendication 2, **caractérisé en ce que** le segment de surface peut, par son bord de fixation (22), être immobilisé dans le logement (31) en étant étanché tout autour, **en ce que** le logement présente une face de soutien (33) sur laquelle le segment de surface s'appuie au moins partiellement, et **en ce que**, à l'état assemblé des éléments de construction (10, 30), une chambre étanchée est formée entre le segment de surface et la face de soutien (33).

7. Connecteur selon la revendication 1, **caractérisé en ce que** la pièce de maintien (23) est accouplée dans la région centrale de la partie de soutien (21).

8. Connecteur selon la revendication 1, **caractérisé en ce que** la pièce de maintien (23) porte deux parties de soutien (21), dont l'une peut être accouplée au premier élément de construction (10) et l'autre au deuxième élément de construction (30).

9. Connecteur selon la revendication 8, **caractérisé en ce que** les parties de soutien (21) sont réalisées de construction identique.

10. Connecteur selon la revendication 1, **caractérisé en ce que** le logement (31) dans les éléments de construction (10, 30) est formé par une pièce rapportée (32) qui peut être insérée et immobilisée dans un évidement des éléments de construction (10, 30).
